# EUROPEAN PATENT SPECIFICATION

(11) **EP 2 075 178 B1**
(45) Date of publication and mention of the grant of the patent: **17.04.2013**
(21) Application number: 08022499.1
(22) Date of filing: 29.12.2008
(51) Int. Cl.: B62J 1/00

(54) **Seat for two-wheeled vehicle and three-wheeled vehicle and the method for manufacturing the same**
Sitz für Zweirad- und Dreiradfahrzeug und Herstellungsverfahren dafür
Siège pour véhicule à deux roues et tricycle et procédé de fabrication de celui-ci

(30) Priority: 25.12.2007 JP 2007333052
(43) Date of publication of application: 01.07.2009
(73) Proprietor: TS Tech Co., Ltd., Asaka-shi, Saitama 351-0012 (JP)
(72) Inventor: Shinichiro, Motoda, Shioya-gun Tochigi 329-1217 (JP); Kiya, Katsuhiro, Shioya-gun Tochigi 329-1217 (JP); Honma, Yuichi, Shioya-gun Tochigi 329-1217 (JP)
(74) Representative: Grünecker, Kinkeldey, Stockmair & Schwanhäusser

(56) References cited:
- EP-A2- 0 362 149
- EP-A2- 1 445 181
- DE-B- 1 004 509
- US-A- 3 988 034
- US-A- 4 232 899
- US-A- 4 691 963

## Description

The present invention relates to a seat for a two or three-wheeled vehicle and a manufacturing method therefor and, more particularly, to a seat for a two or three-wheeled vehicle, which is provided with a backrest, and a manufacturing method therefor.
US 4,691,963 A refers to a tandem seat for a two-wheeled vehicle having a front bottom section and a rear bottom section which are formed integrally with each other. Said document also discloses a cover for the front and rear seat sections with a cushion forming a part of the front seat section and a cushion forming a part of the rear seat section whereby the front cushion is covered with a front cover material and the rear cover is covered with a rear cover material.
US 4,232,899 A discloses a seat provided with a seating part and a back rest formed continuously with the seating part and a cushioning material, a cover in which a front cover material covering the seating part and a backrest cover material covering the backrest are formed continuously, a led-in cloth formed at least in the boundary region between the front cover material and the backrest cover material, and a front cushion forming a part of the seating part placed on resilient webbing strips and a backrest cushion forming a part of the backrest. The front cushion is covered with the front cover material and the backrest cushion is covered with the backrest material.
EP 0 362 149 A discloses a seat having a bottom plate and a cover in which a front cover material covering the seating part and a backrest cover material covering the backrest are formed continuously, a front cushion forming a part of the seating part placed on the bottom plate and a backrest cushion forming a part of the backrest. The front cushion is covered with the front cover material and the backrest cushion is covered with the backrest cover material.
EP 1 445 181 A shows a structure of a seat of a motorcycle and especially a tandem seat. A step is provided between a driver's seat and occupant's seat.
DE 10 04 509 B refers to a seat arrangement for two-wheeled vehicles and shows a main frame which comprises a guide. On said guide a base is arranged. There is arranged a driver seat 4 with a backrest 5 on said base. A cushion for the passenger comprises a backrest which can be tilted back by a hinge arrangement.

Conventionally, a technique in which a seat for a two or three-wheeled vehicle is provided with a backrest has been known. Since the seat for a two or three-wheeled vehicle is directly exposed to the weather in the open air, a waterproof seat has been used. Therefore, a technique in which a seating part and a backrest are separated from each other has been proposed (Japanese Unexamined Patent Application Publication No. 1998-203445). However, this technique has a problem in that not only a sense of unity is lacking as a seat for a two or three-wheeled vehicle because the seating part and the backrest are separated from each other but also the assembling manpower increases because the seating part and the backrest are assembled separately.
Also, a technique in which the backrest is formed so as to be movable with respect to the seating part has also been proposed (Japanese Unexamined Patent Application Publication No. 2001-341682).

In the conventional technique in which the seating part and the backrest are formed by being clearly distinguished from each other, the seating part and the backrest are formed separately, and cover materials are put simply on cushioning materials for the seating part and the backrest, so that a sense of unity is lacking, and the assembling manpower doubles.

On the other hand, in a technique in which the cushioning material for the seating part and the backrest is formed integrally, a partitioning part serving as a groove part is formed in the cushioning material between the seating part and the backrest, and the seat is covered with the cover material, a sense of high quality is lacking because the seating part and the backrest seem to be flattened, and also the contact of a side part of seat between the seating part and the backrest with the passenger's crotch decreases the durability of cover, so that the cover may get torn. Also, for the conventional seat for a two or three-wheeled vehicle provided with the backrest, it has been difficult to form an intricate three-dimensional shape in the range from the seating part to the backrest.

As described above, for the seat for a two or three-wheeled vehicle, unlike the seat for a four-wheeled vehicle, the formation, arrangement position, and the like of seat are greatly restricted because of its space. Therefore, the seat for a two or three-wheeled vehicle suffers a disadvantage that if the seating part and the backrest are not separated from each other, a sense of high quality cannot be created, and if they are separated from each other, not only a sense of unity of seat is lost but also the number of assembling processes increases, and restrictions in designing are placed on the seat arrangement.

Accordingly, it has been desired to provide a seat for a two or three-wheeled vehicle, which has a shape as if the seating part and the backrest are separated from each other, and moreover has the seating part and the backrest having a sense of unity.

An object of the present invention is to provide a seat for a two or three-wheeled vehicle, in which a seating part and a backrest are configured into a three-dimensional shape as if they are separated from each other although being formed integrally as a seat for a two or three-wheeled vehicle to increase the commodity value of appearance, and moreover the durability of a cover is improved by preventing the cover in a continuous part in which the covers are joined from getting torn, and a manufacturing method for the seat for a two or three-wheeled vehicle.

To achieve the above object, the present invention provides a seat for a two or three-wheeled vehicle, provided with a seating part and a backrest formed continuously with the seating part and configured so that a cushioning material is placed on a bottom plate and is covered with a cover, including a cover in which a front cover material covering the seating part and a backrest cover material covering the backrest are formed continuously; a led-in cloth formed at least in the boundary region between the front cover material and the backrest cover material; a front cushion forming a part of the seating part placed on the bottom plate and a backrest cushion forming a part of the backrest; and the bottom plate provided with a leading-in slit formed in the bottom plate, wherein the led-in cloth is joined to the bottom plate through the slit in the bottom plate on the back surface side of the bottom plate; a portion in which the sides of the front cover material and the backrest cover material are continuous is fixed onto the back surface at the side of the bottom plate; and the front cushion is covered with the front cover material, and the backrest cushion is covered with the backrest cover material.

Since the portion in which the sides of the front cover material and the backrest cover material are continuous is fixed onto the back surface at the side of the bottom plate as described above, the portion in which the sides of the front cover material and the backrest cover material are continuous does not come into direct contact with the seat occupant's crotch when the seat occupant is seated. Therefore, the cover is less liable to get torn, a sense of unity is provided, and the commodity value of appearance increases.
Also, since the seating part and the backrest are formed by an integral cover, raindrops (waterdrops) can be prevented from intruding into the cushion.
Further, since the seating part and the backrest are configured as if being separated from each other by being led in deeply, the seating part and the backrest can be configured as if they are separated from each other although being formed integrally. Also, since the cover is integral, the cover materials of the seating part and the backrest are prevented from being pulled directly, so that the durability of the cover can be improved by preventing the cover from getting torn.

It is preferable that the front cover material covering the seating part and the backrest cover material covering the backrest be joined to each other by high-frequency welder welding and be formed continuously. Since the front cover material and the backrest cover material are joined by welder welding as described above, raindrops (waterdrops) can be prevented from intruding into the cushion.

Also, it is preferable that at least in the boundary region between the front cover material and the backrest cover material, the led-in cloth includes a central drawn-in part and drawn-in parts on both sides of the central drawn-in part. By this configuration, unlike the led-in cloth consisting of the central drawn-in part only, wrinkles can be prevented from being formed because the cover is pulled by the drawn-in parts on both sides.

Further, it is preferable that in the boundary region between the front cushion and the backrest cushion, the bottom plate be formed with a concave part directed to the lower side of vehicle body, and in the rear of the concave part, the bottom plate be provided with the slit formed at almost the same position as the upper surface region position of the front cushion. By this configuration, a backrest rising part can be formed by the concave part. Also, since the bottom plate is provided with a slit formed at almost the same position as the upper surface region position of the front cushion, the front cover material of the seating part can be led in to the bottom plate side on the extension of the seating part, so that the front cushion can be prevented from being deformed excessively.

Preferably, to the back surface of the bottom plate, a cover member for covering the leading-in slit and the led-in cloth led in through the slit is joined. By this cover member, waterdrops can be prevented from intruding from the back surface side of the bottom plate.

Also, the backrest cushion is preferably formed so as to become thicker gradually toward the rear with the boundary region between the front cushion and the backrest cushion being thin. By making the backrest cushion thicker gradually as described above, the backrest can be formed in the upright direction.

To achieve the above object, the present invention provides a manufacturing method for a seat for a two or three-wheeled vehicle, the seat being provided with a seating part and a backrest formed continuously with the seating part and configured so that a cushioning material is placed on a bottom plate and is covered with a cover, including a led-in cloth fixing step in which a central led-in cloth joined to a substantially central region of a cover in which a front cover material covering a seating part and a backrest cover material covering the backrest are formed continuously is fixed onto the back surface side of a bottom plate through a slit in the bottom plate; a side fixing step in which a portion in which the sides of the front cover material and the backrest cover material are continuous is fixed onto the side back surface of the bottom plate; a led-in cloth side fixing step in which the sides of the led-in cloth formed at least in the boundary region between the front cover material and the backrest cover material are fixed to the bottom plate; a front cushion placing step in which a front cushion is placed in the seating region of the bottom plate; a front cover material fixing step in which the front cover material is placed over the front cushion, being subjected to terminal treatment except a cover region in which the seating part is continuous with the backrest, and is fixed; a backrest cushion placing step in which a backrest cushion is placed on the backrest arrangement region of the bottom plate by being brought into contact with the front cushion via the front cover material placed over the front cushion; and a backrest cover material fixing step in which the backrest cover material is placed over the backrest cushion, being subjected to terminal treatment, and is fixed.

By this method, a seat for a two or three-wheeled vehicle having features of the present invention can be manufactured.

According to the present invention, since the portion in which the sides of the front cover material and the backrest cover material are continuous is fixed onto the back surface at the side of the bottom plate, the portion in which the sides of the front cover material and the backrest cover material are continuous does not come into direct contact with the seat occupant's crotch when the seat occupant is seated. Therefore, the cover is less liable to get torn, a sense of unity is provided, and the commodity value of appearance increases.
Also, since the seating part and the backrest are formed by an integral cover, raindrops (waterdrops) can be prevented from intruding into the cushion.
Further, since the seating part and the backrest are configured as if being separated from each other by being led in deeply, the seating part and the backrest can be configured as if they are separated from each other although being formed integrally. Also, since the cover is integral, the cover materials of the seating part and the backrest are prevented from being pulled directly, so that the durability of the cover can be improved by preventing the cover from getting torn. Also, in the manufacturing method, after the led-in cloth fixing step and the led-in cloth side fixing step have been carried out, the cushion is placed and is covered with the cover. Therefore, a seat for a two or three-wheeled vehicle, which is uniform and good in appearance, can be manufactured because the cover is assembled after being fixed at the leading-in position in advance.
Thus, according to the present invention, the commodity value of appearance can be increased, and the durability of the cover can be improved by preventing the cover from getting torn.

FIG. 1 is a schematic perspective view of a seat for a two or three-wheeled vehicle in accordance with an embodiment of the present invention;
FIG. 2 is a bottom plan view of a seat for a two or three-wheeled vehicle in accordance with an embodiment of the present invention;
FIG. 3 is a schematic longitudinal sectional view taken along the line X-X of FIG. 2;
FIG. 4 is an enlarged view of an essential portion of FIG. 3;
FIG. 5 is an explanatory view of a treatment process for a side gusset;
FIG. 6 is an explanatory view of a process for fixing a side led-in cloth to a bottom plate;
FIG. 7 is an explanatory view of a process for fixing a side led-in cloth to a bottom plate;
FIG. 8 is an explanatory view of a manufacturing process, corresponding to the A-A cross section of FIG. 1;
FIG. 9 is an explanatory view of a manufacturing process, corresponding to the B-B cross section of FIG. 1; and
FIG. 10 is a flow diagram of a manufacturing process of the seat for a two or three-wheeled vehicle shown in FIG. 1.

One embodiment of the present invention will now be described with reference to the accompanying drawings. The elements, arrangement, and the like described below do not limit the present invention, and, needless to say, can be modified and changed variously without departing from the on which the seat occupant sits astride scope of the present invention.

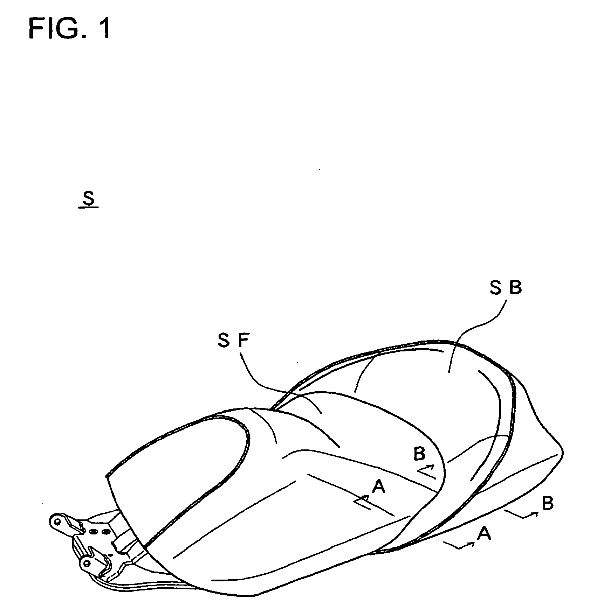

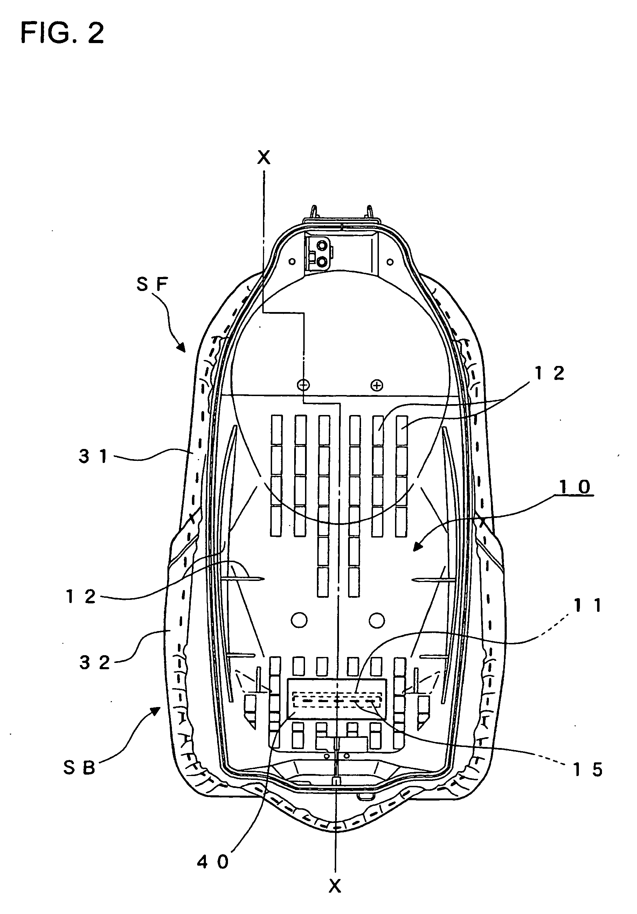

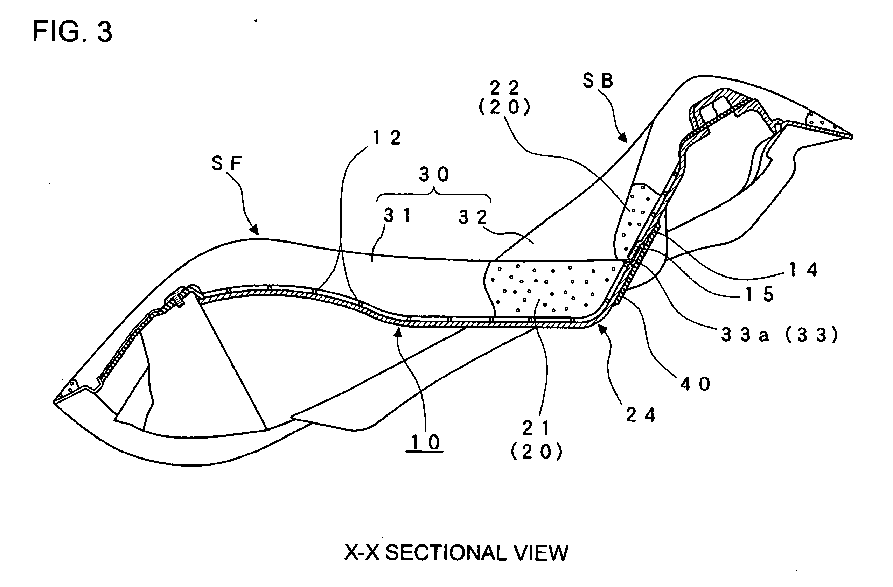

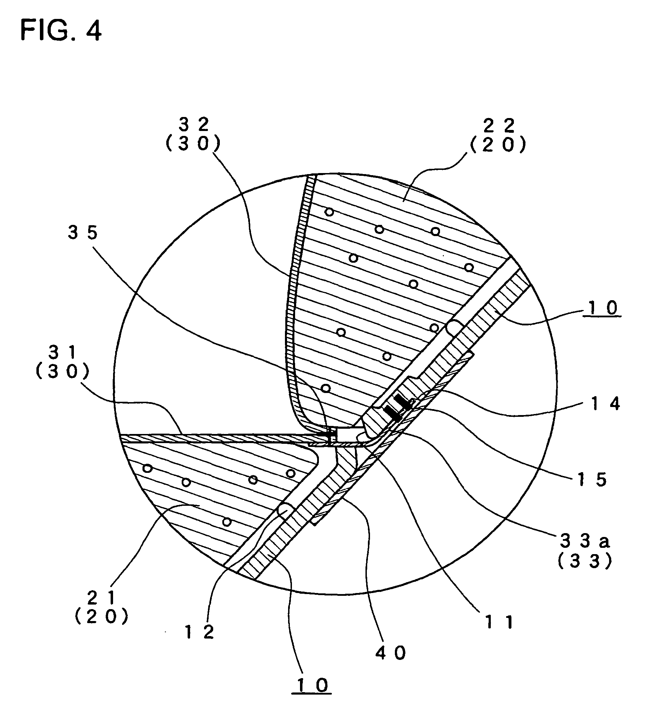

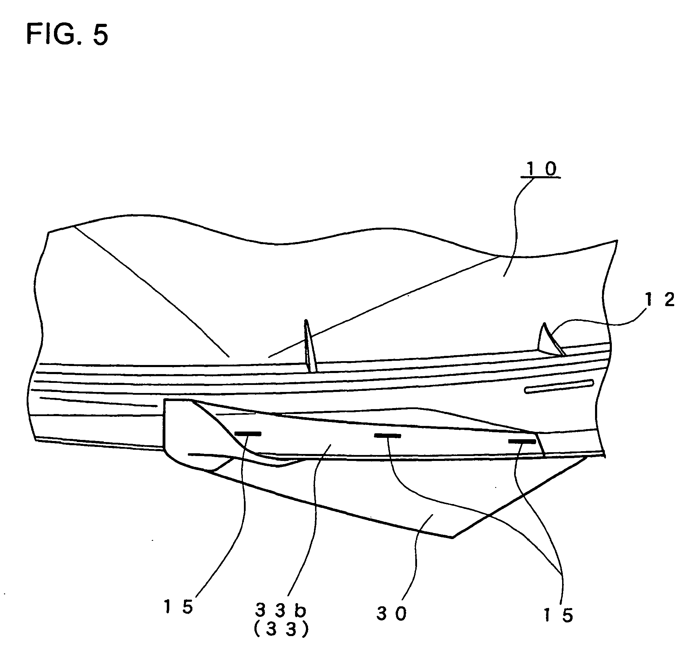

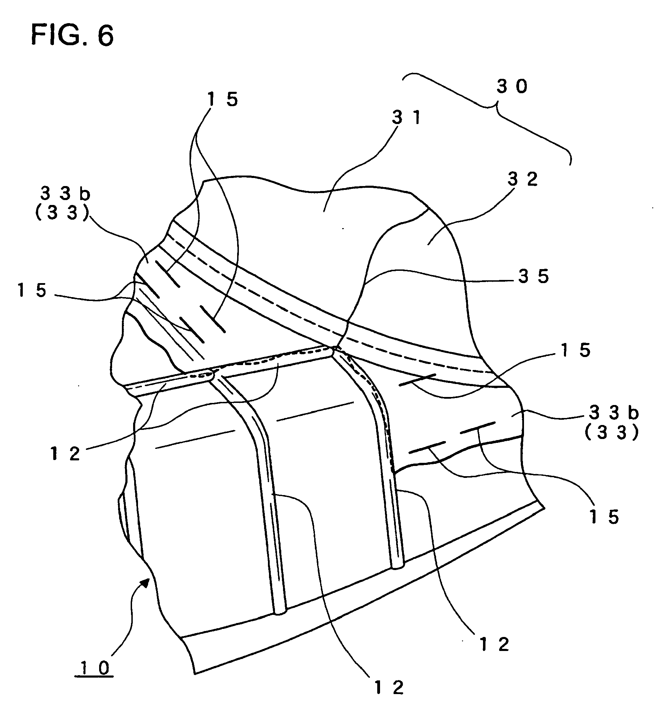

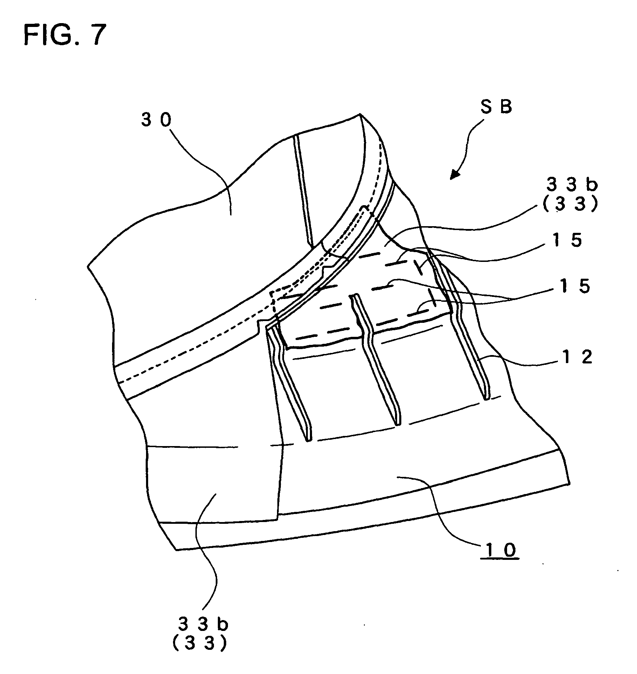

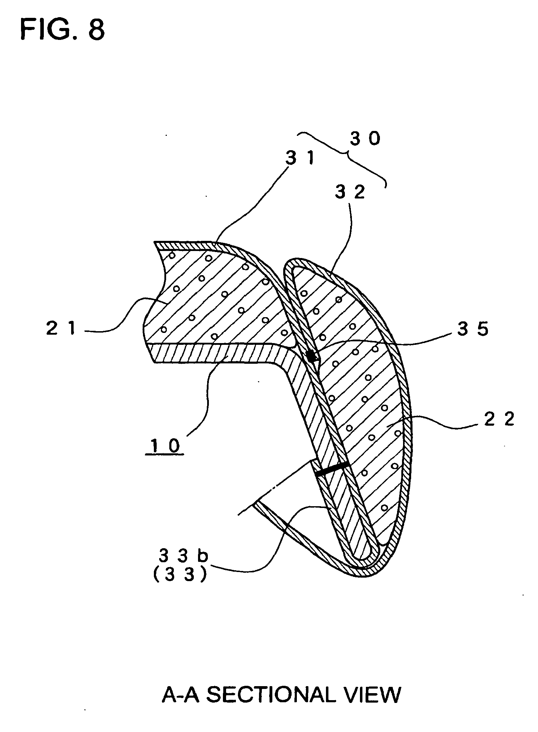

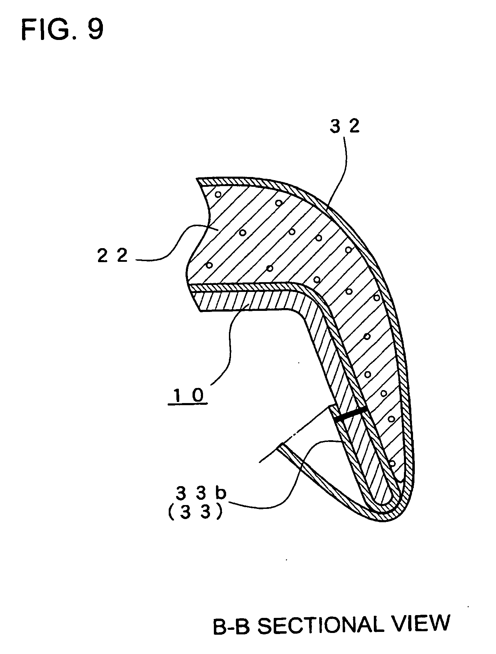

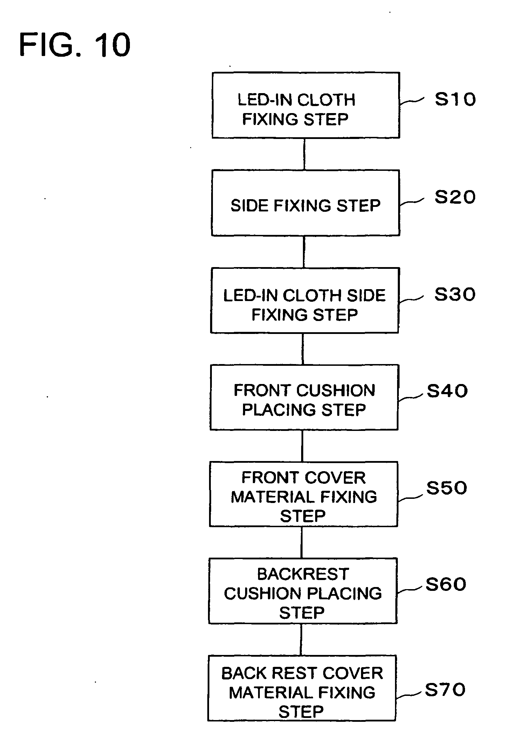

FIGS. 1 to 10 show the embodiment of the present invention. FIG. 1 is a schematic perspective view of a seat for a two or three-wheeled vehicle, FIG. 2 is a bottom plan view thereof, FIG. 3 is a schematic longitudinal sectional view taken along the line X-X of FIG. 2, FIG. 4 is an enlarged view of an essential portion of FIG. 3, FIG. 5 is an explanatory view of a treatment process for a side gusset, FIGS. 6 and 7 are explanatory views of a process for fixing a side led-in cloth to a bottom plate, FIG. 8 is an explanatory view of a manufacturing process, corresponding to the A-A cross section of FIG. 1, FIG. 9 is an explanatory view of a manufacturing process, corresponding to the B-B cross section of FIG. 1, and FIG. 10 is a flow diagram of a manufacturing process of the seat for a two or three-wheeled vehicle.

A seat S for a two or three-wheeled vehicle in accordance with this embodiment includes a seating part SF and a backrest SB, and also has a bottom plate 10, a cushioning material 20, and a cover 30 as principal elements.

As shown in FIGS. 3 and 4, the cover 30 of this embodiment includes a front cover material 31 covering the seating part SF, a backrest cover material 32 covering the backrest SB, and a led-in cloth 33. The front cover material 31 and the backrest cover material 32 are joined to each other in advance in the joint region by a joint part 35 by high-frequency welder welding, and are formed as a continuous cover material.

The led-in cloth 33 of this embodiment includes a central drawn-in part 33a and drawn-in parts 33b on both sides of the drawn-in part 33a. At least in a boundary region between the front cover material 31 and the backrest cover material 32, the led-in cloth 33 is joined by stitching, welding, or the like.
The central drawn-in part 33a of the led-in cloth 33 is led in through a slit 11, described later, formed in the bottom plate 10, and is fixed onto the back surface of the bottom plate 10.

On the other hand, the drawn-in parts (side parts of the led-in cloth 33) 33b formed integrally with the led-in cloth 33 are fixed onto the cushioning material arranging surface of the bottom plate 10. The central drawn-in part 33a and the drawn-in parts 33b on both sides of the led-in cloth 33 are fixed to the bottom plate 10 with staples 15 or the like, and are covered with a cover member 40.

The cushioning material 20 includes a front cushion 21 forming a part of the seating part SF and a backrest cushion 22 forming a part of the backrest SB. The front cushion 21 and the backrest cushion 22 are formed separately, and have an intricate three-dimensional shape so as to fit the seat occupant.

As shown in FIGS. 1 and 3, the front cushion 21 of this embodiment has a three-dimensional shape so that when the seat occupant sits astride, he/she can be seated so as to fit the cushion. The backrest cushion 22 following the front cushion 21 is formed so as to become thicker gradually toward the rear with the boundary region between the front cushion 21 and the backrest cushion 22 being thin. That is to say, the backrest cushion 22 is configured so that the thickness thereof is small on the front cushion side and increases as the distance from the front cushion 21 increases. Thus, the front cushion 21 forming a part of the seating part SF and the backrest cushion 22 forming a part of the backrest SB have an intricate three-dimensional shape considering the comfort of seat occupant and the commodity value of appearance.

The bottom plate 10 of this embodiment is formed, in the boundary region between the front cushion 21 and the backrest cushion 22, with a concave part 24 directed to the lower side of vehicle body.
Also, in the rear of the concave part 24 of the bottom plate 10, the slit 11 is formed at an upper position above the concave part 24. Although the position of the slit 11 is in the rear of the concave part 24, the slit 11 is formed at almost the same position as the upper surface region position of the front cushion 21. The upper back surface side (the right side in FIG. 4) continuous with the slit 11 is formed into a level difference 14, and is configured so that when the aforementioned central drawn-in part 33a is fixed with the staples 15, the central drawn-in part 33a and the staples 15 do not project.
Also, at the appropriate locations of the bottom plate 10, ribs 12 are formed to maintain the strength and the like.

A portion in which the side of the cover 30 is continuous (that is, the side of a portion in which the front cover material 31 is continuous with the backrest cover material 32) is fixed by the side back surface of the bottom plate 10. Thus, by fixing the portion in which the side of the cover 30 is continuous by means of side back surface of the bottom plate 10, the portion in which the front cover material 31 is continuous with the backrest cover material 32 does not come into direct contact with the passenger, so that the cover 30 can be made hard to get torn.

The front cushion 21 is covered with the front cover material 31, and the backrest cushion 22 is covered with the backrest cover material 32. To the back surface of the bottom plate 10, a cover member 40 for covering the leading-in slit 11 and the led-in cloth 33 (the drawn-in part 33a) led in through the slit 11 is joined. The cover material 40 is formed of a seat material such as PE, and is fixed to the bottom plate 10 with a double-faced adhesive tape or the like.

Next, a manufacturing method for the seat for a two or three-wheeled vehicle is explained. As described above, the seat for a two or three-wheeled vehicle is configured so that the seating part SF and the backrest SB formed continuously with the seating part SF are provided, and the cushioning material 20 is placed on the bottom plate 10 and is covered with the cover 30.
FIG. 5 is an explanatory view of a treatment process for a side gusset, FIGS. 6 and 7 are explanatory views of a process for fixing a side led-in cloth to a bottom plate, FIG. 8 is an explanatory view of a manufacturing process, corresponding to the A-A cross section of FIG. 1, FIG. 9 is an explanatory view of a manufacturing process, corresponding to the B-B cross section of FIG. 1, and FIG. 10 is a flow diagram of a manufacturing process of the seat for a two or three-wheeled vehicle.
The seat for a two or three-wheeled vehicle is manufactured by following the flow diagram of FIG. 10.

First, a led-in cloth fixing step S10 is carried out. In this step S10, the central led-in cloth 33 (the drawn-in part 33a) joined to a substantially central region of the cover 30 in which the front cover material 31 covering the seating part SF and the backrest cover material 32 covering the backrest SB are formed continuously is fixed onto the back surface side of the bottom plate 10 through the slit 11 in the bottom plate 10. In this embodiment, the led-in cloth 33 is fixed by being joined to the bottom plate 10 with the staples 15. At this time, since the bottom plate 10 is formed with the level difference 14, the end part of the drawn-in part 33a is arranged so as to match the position of the level difference 14, by which the led-in cloth 33 can be fixed at the exact position.

Next, a side fixing step S20 is carried out. In this step S20, the led-in cloth 33 (the drawn-in part 33b) in a portion in which the side of the cover 30 is continuous, that is, a portion in which the front cover material 31 and the backrest cover material 32 are formed continuously is fixed onto the side back surface of the bottom plate 10.

FIG. 5 is an explanatory view of the case where the drawn-in part 33b is fixed on the back surface side (the side opposite to the surface on which the cushioning material 20 is placed) of the bottom plate 10. As shown in FIG. 5, the portion in which the side of the cover 30 is continuous (the led-in cloth 33 corresponding to a side gusset) is fixed onto the back side of both-side positions of the bottom plate 10 with the staples 15. Thereby, the positions of the central part and the side parts of the cover 30 are fixed with respect to the bottom plate 10.

In this side fixing step S20, first, both sides of the slit 11 in the bottom plate 10 is fixed at the arrangement position of the backrest cushion 22 on the bottom plate 10. The side of the portion in which the front cover material 31 and the backrest cover material 32 are formed continuously is pulled, and is fixed at predetermined locations (four locations in this example). At this time, the welder welding part of the front cover material 31 and the backrest cover material 32 is pushed in, and is positioned.

Next, a led-in cloth side fixing step S30 is carried out. In this step S30, as shown in FIGS. 6 and 7, the drawn-in parts 33b on both sides of the led-in cloth 33 formed at least in the boundary region between the front cover material 31 and the backrest cover material 32 are fixed to the bottom plate 10.

In this led-in cloth side fixing step S30, the drawn-in part 33b is fixed at a plurality of (four in the figure) locations. The cut of the drawn-in part 33b is aligned with the rib 12 formed on the bottom plate 10. Also, the side end of the drawn-in part 33b is aligned with the level difference 14 of the bottom plate 10.
After the drawn-in parts 33b have been fixed, check is made to ensure that all staples 15 are driven, the led-in cloth 33 (33a, 33b) is not shifted in position, and wrinkles are not formed in appearance.

Next, a front cushion placing step S40, in which the front cushion 21 is placed in the seating region of the bottom plate 10, is carried out. In this step, since the range in which the front cushion 21 is to be placed is specified by the already fixed led-in cloth 33, the front cushion 21 is arranged from the front side.

Next, a front cover material fixing step S50, in which the front cover material 31 is placed over the front cushion 21, being subjected to terminal treatment except a cover region in which the seating part SF is continuous with the backrest SB, and is fixed, is carried out. In this step, the front cover material 31 is placed over the front cushion 21 from the drawn-in part 33b toward the front, and the terminal treatment of the front cover material 31 is performed while the front cushion 21 is pressed.

Next, a backrest cushion placing step S60 is carried out. In this step S60, the backrest cushion 22 is placed on the backrest arrangement region of the bottom plate 10 by being brought into contact with the front cushion 21 via the front cover material 31 placed on the front cushion 21.

Next, as shown in FIG. 8, a backrest cover material fixing step S70, in which the backrest cover material 32 is placed over the backrest cushion 22, being subjected to terminal treatment, and is fixed, is carried out. In this step, since the front cushion 21 and the front cover material 31 have already been fixedly disposed on the bottom plate 10, the backrest cover material 32 is placed on the backrest cushion 22 from the drawn-in part 33b side toward the rear, and the terminal treatment of the backrest cover material 32 is performed while the backrest cushion 22 is pressed.

FIG. 8 is an explanatory view of a portion in which the backrest cushion 22 is arranged in the side part, and FIG. 9 is an explanatory view showing an example in which the backrest cushion 22 is placed over the drawn-in part 33b, which has been drawn in, by a side gusset.
In this step, the cushion is pressed to prevent the tip end of the backrest cushion 22 from being turned up, and the backrest cover material 32 is placed. The side end of the backrest cover material 32 is aligned with the cover end of the already fixed front cover material 31.

Thus, the continuous portion of the front cover material 31 and the backrest cover material 32 is made a deep groove, and is invisible from the surface, so that this portion can be made seem as if being separated. Since the continuous portion of the front cover material 31 and the backrest cover material 32 is hidden, this portion does not come into contact with the passenger, and therefore is less liable to get torn.

In the above-described embodiment, the terminal treatment is performed by joining the end of the cover (cover material) to the bottom plate and the like with the staples or the like, and increases the commodity value in terms of function, appearance, and the like.

## Claims

1. A seat (S) for a two or three-wheeled vehicle on which the seat occupant sits astride, provided with a seating part (SF) and a backrest (SB) formed continuously with the seating part (SF) and configured so that a cushioning material (20) is placed on a bottom plate (10) and is covered with a cover (30), comprising:
a cover (30) in which a front cover material (31) covering the seating part (SF) and a backrest cover material (32) covering the backrest (SB) are formed continuously;
a led-in cloth (33) formed at least in the boundary region between the front cover material (31) and the backrest cover material (32);
a front cushion (21) forming a part of the seating part (SF) placed on the bottom plate (10) and a backrest cushion (22) forming a part of the backrest (SB); and
the bottom plate (10) provided with a leading-in slit (11) formed in the bottom plate (10), wherein
the led-in cloth (33) is joined to the bottom plate (10) through the slit (11) in the bottom plate (10) on the back surface side of the bottom plate (10);
a portion in which the sides of the front cover material (31) and the backrest cover material (32) are continuous is fixed onto the back surface at the side of the bottom plate (10); and
the front cushion (21) is covered with the front cover material (31), and the backrest cushion (22) is covered with the backrest cover material (32).

2. The seat (S) for a two or three-wheeled vehicle according to claim 1, wherein the front cover material (31) covering the seating part (SF) and the backrest cover material (32) covering the backrest (SB) are joined to each other by high-frequency welder welding and are formed continuously.

3. The seat (S) for a two or three-wheeled vehicle according to claim 1, wherein at least in the boundary region between the front cover material (31) and the backrest cover material (32), the led-in cloth (33) comprises a central drawn-in part (33a) and drawn-in parts (33b) on both sides of the central drawn-in part (33a).

4. The seat (S) for a two or three-wheeled vehicle according to claim 1, wherein in the boundary region between the front cushion (21) and the backrest cushion (22), the bottom plate (10) is formed with a concave part directed to the lower side of vehicle body, and in the rear of the concave part, the bottom plate (10) is provided with the slit (11) formed at almost the same position as the upper surface region position of the front cushion (21).

5. The seat (S) for a two or three-wheeled vehicle according to claim 1, wherein to the back surface of the bottom plate (10), a cover member (40) for covering the leading-in slit (11) and the led-in cloth (33) led in through the slit (11) is joined.

6. The seat (S) for a two or three-wheeled vehicle according to claim 1, wherein the backrest cushion (22) is formed so as to become thicker gradually toward the rear with the boundary region between the front cushion (21) and the backrest cushion (22) being thin.

7. The seat (8) for a two or three-wheeled vehicle according to claim 3, wherein the central drawn-in part (33a) and the drawn-in parts (33b) on both sides of the led-in cloth (33) are fixed to the bottom plate (10) with staples (15).

8. A manufacturing method for a seat (S) for a two or three-wheeled vehicle on which the seat occupant sits astride, the seat (S) being provided with a seating part (SF) and a backrest (SB) formed continuously with the seating part (SF) and configured so that a cushioning material (20) is placed on a bottom plate (10) and is covered with a cover (30), comprising:
a led-in cloth fixing step in which a central led-in cloth (33a) joined to a substantially central region of a cover (30) in which a front cover material (31) covering a seating part (SF) and a backrest cover material (32) covering the backrest (SB) are formed continuously is fixed onto the back surface side of a bottom plate (10) through a slit (11) in the bottom plate (10);
a side fixing step in which a portion in which the sides of the front cover material (31) and the side of the backrest cover material (32) are continuous is fixed onto the side back surface of the bottom plate (10);
a led-in cloth side fixing step in which the sides of the led-in cloth (33) formed at least in the boundary region between the front cover material (31) and the backrest cover material (32) are fixed to the bottom plate (10);
a front cushion placing step in which a front cushion (21) is placed in the seating region of the bottom plate (10);
a front cover material fixing step in which the front cover material (31) is placed over the front cushion (21), being subjected to terminal treatment except a cover region in which the seating part (SF) is continuous with the backrest (SB), and is fixed;
a backrest cushion placing step in which a backrest cushion (22) is placed on the backrest arrangement region of the bottom plate (10) by being brought into contact with the front cushion (21) via the front cover material (31) placed over the front cushion (21); and
a backrest cover material (32) fixing step in which the backrest cover material (32) is over the backrest cushion (22), being subjected to terminal treatment, and is fixed.

9. The manufacturing method for a seat (5) for a two or three-wheeled vehicle according to claim 8, wherein the led-in cloth (33) is fixed to the bottom plate (10) with staples (15) in the led-in cloth fixing step.

## Patentansprüche

1. Sitz (S) für ein zwei- oder dreirädriges Fahrzeug, auf dem der Sitzende mit gespreizten Beinen sitzt, und der mit einem Sitzteil (SF) sowie einer Rückenlehne (SB) versehen ist, die im Anschluss an den Sitzteil (SF) ausgebildet und so eingerichtet ist, dass ein Polstermaterial (20) auf einer Grundplatte (10) angeordnet ist und mit einem Bezug (30) abgedeckt ist, wobei er umfasst:
einen Bezug (30), bei dem ein vorderes Bezugmaterial (31), das den Sitzteil (SF) abdeckt, und ein Sitzlehnen-Bezugmaterial (32), das die Sitzlehne (SB) abdeckt, durchgehend ausgebildet sind;
einen Einführstoff (33), der wenigstens in dem Grenzbereich zwischen dem vorderen Bezugmaterial (31) und dem Sitzlehnen-Bezugmaterial (32) ausgebildet ist;
ein vorderes Polster (21), das einen Teil des Sitzteils (SF) bildet, der auf der Grundplatte (10) angeordnet ist, und ein Sitzlehnen-Polster (22), das einen Teil der Sitzlehne (SB) bildet; und
die Grundplatte (10), die mit einem Einführschlitz (11) versehen ist, der in der Grundplatte (10) ausgebildet ist, wobei
der Einführstoff (33) über den Schlitz (11) in der Grundplatte (10) an der Seite der hinteren Fläche der Grundplatte (10) mit der Grundplatte (10) verbunden ist;
ein Abschnitt, in dem die Seiten des vorderen Bezugmaterials (31) und des Sitzlehnen-Bezugmaterials (32) ineinander übergehen, an der hinteren Fläche an der Seite der Grundplatte (10) befestigt ist; und
das vordere Polster (21) mit dem vorderen Bezugmaterial (31) abgedeckt ist und das Sitzlehnen-Polster (22) mit dem Sitzlehnen-Bezugmaterial (32) abgedeckt ist.

2. Sitz (S) für ein zwei- oder dreirädriges Fahrzeug nach Anspruch 1, wobei das vordere Bezugmaterial (31), das den Sitzteil (SF) abdeckt, und das Sitzlehnen-Bezugmaterial (32), das die Sitzlehne (SB) abdeckt, mittels Schweißen mit einem Hochfrequenz-Schweißgerät verbunden werden und durchgehend ausgebildet sind.

3. Sitz (S) für ein zwei- oder dreirädriges Fahrzeug nach Anspruch 1, wobei wenigstens in dem Grenzbereich zwischen dem vorderen Bezugmaterial (31) und dem Sitzlehnen-Bezugmaterial (32) der Einführstoff (33) einen mittleren Einziehteil (33a) und Einziehteile (33b) an beiden Seiten des mittleren Einziehteils (33a) umfasst.

4. Sitz (S) für ein zwei- oder dreirädriges Fahrzeug nach Anspruch 1, wobei in dem Grenzbereich zwischen dem vorderen Polster (21) und dem Sitzlehnen-Polster (22) die Grundplatte (10) mit einem konkaven Teil versehen ist, der zu der unteren Seite der Fahrzeugkarosserie hin gerichtet ist, und die Grundplatte (10) an der Rückseite des konkaven Teils mit dem Schlitz (11) versehen ist, der nahezu an der gleichen Position wie der Position des Bereiches der oberen Fläche des vorderen Polsters (21) ausgebildet ist.

5. Sitz (S) für ein zwei- oder dreirädriges Fahrzeug nach Anspruch 1, wobei mit der hinteren Fläche der Grundplatte (10) ein Abdeckelement (40) zum Abdecken des Einführungsschlitzes (11) und des über den Schlitz (11) eingeführten Einführstoffs (33) verbunden ist.

6. Sitz (S) für ein zwei- oder dreirädriges Fahrzeug nach Anspruch 1, wobei das Sitzlehnen-Polster (22) so ausgebildet ist, dass es nach hinten allmählich dicker wird, wobei der Grenzbereich zwischen dem vorderen Polster (21) und dem Sitzlehnen-Polster (22) dünn ist.

7. Sitz (8) für ein zwei- oder dreirädriges Fahrzeug nach Anspruch 3, wobei der mittlere Einziehteil (33a) und die Einziehteile (33b) an beiden Seiten des Einführstoffs (33) mit Klammern (15) an der Grundplatte (10) befestigt sind.

8. Herstellungsverfahren für einen Sitz (S) für ein zwei- oder dreirädriges Fahrzeug, auf dem der Sitzende mit gespreizten Beinen sitzt, wobei der Sitz (S) mit einem Sitzteil (SF) sowie einer Rückenlehne (SB) versehen ist, die in Anschluss an den Sitzteil (SF) ausgebildet und so eingerichtet ist, dass ein Polstermaterial (20) auf einer Grundplatte (10) angeordnet ist und mit einem Bezug (30) abgedeckt ist, und das Verfahren umfasst:
einen Schritt zum Befestigen eines Einführstoffs, in dem ein mittlerer Einführstoff (33a), der mit einem im Wesentlichen mittigen Bereich eines Bezugs (30) verbunden ist, in dem ein vorderes Bezugmaterial (31), das einen Sitzteil (SF) abdeckt, und ein Sitzlehnen-Bezugmaterial (32), das die Sitzlehne (SB) abdeckt, durchgehend ausgebildet sind, über einen Schlitz (11) in einer Grundplatte (10) an der Seite der hinteren Fläche der Grundplatte (10) befestigt wird;
einen Schritt zum seitlichen Befestigen, in dem ein Abschnitt, in dem die Seiten des vorderen Bezugmaterials (31) und die Seite des Sitzlehnen-Bezugmaterials (32) ineinander übergehen, an der seitlichen hinteren Fläche der Grundplatte (10) befestigt wird;
einen Schritt zum Befestigen von Seiten eines Einführstoffs, in dem die Seiten des Einführstoffs (33), die wenigstens in dem Grenzbereich zwischen dem vorderen Bezugmaterial (31) und dem Sitzlehnen-Bezugmaterial (32) ausgebildet sind, an der Grundplatte (10) befestigt werden;
einen Schritt zum Anordnen eines vorderen Polsters, in dem ein vorderes Polster (21) in dem Sitzbereich der Grundplatte (10) angeordnet wird;
einen Schritt zum Befestigen des vorderen Bezugmaterials, in dem das vordere Bezugmaterial (31) über dem vorderen Polster (21) angeordnet wird und mit Ausnahme eines Bezug-Bereichs, in dem sich der Sitzteil (SF) an die Sitzlehne (SB) anschließt, Endbehandlung unterzogen wird und befestigt wird;
einen Schritt zum Anordnen eines Sitzlehnen-Polsters, in dem ein Sitzlehnen-Polster (22) an dem Sitzlehnen-Anordnungsbereich der Grundplatte (10) angeordnet wird, indem es über das über dem vorderen Polster (21) angeordnete vordere Bezugmaterial (31) mit dem vorderen Polster (21) in Kontakt gebracht wird; und
einen Schritt zum Befestigen des Sitzlehnen-Bezugmaterials (32), in dem das Sitzlehnen-Bezugmaterial (32) sich über dem Sitzlehnen-Polster (22) befindet, Endbehandlung unterzogen wird und befestigt wird.

9. Herstellungsverfahren für einen Sitz (5) für ein zwei- oder dreirädriges Fahrzeug nach Anspruch 8, wobei der Einführstoff (33) in dem Schritt zum Befestigen des Einführstoffs mit Klammern (15) an der Grundplatte (10) befestigt wird.

## Revendications

1. Siège (S) pour véhicule à deux ou trois roues, sur lequel l'occupant du siège est assis à califourchon, qui est pourvu d'une partie d'assise (SF) et d'un dossier (SB) formé dans le prolongement continu de celle-ci, et qui est conçu de telle sorte qu'un matériau de rembourrage (20) est placé sur une plaque inférieure (10) et est couvert par un recouvrement (30), comprenant :
un recouvrement (30) dans lequel un matériau de recouvrement avant (31) qui couvre la partie d'assise (SF) et un matériau de recouvrement de dossier (32) qui couvre le dossier (SB) sont formés de manière continue ;
un tissu introduit (33) formé au moins dans la zone limite entre le matériau de recouvrement avant (31) et le matériau de recouvrement de dossier (32) ;
un coussin avant (21) qui forme une partie de la partie d'assise (SF) placée sur la plaque inférieure (10), et un coussin de dossier (22) qui forme une partie du dossier (SB) ; et
la plaque inférieure (10) pourvue d'une fente d'introduction (11) formée dans la plaque inférieure (10), étant précisé que
le tissu introduit (33) est relié à la plaque inférieure (10) à travers la fente (11) prévue dans ladite plaque inférieure (10), du côté de la surface arrière de celle-ci ;
une partie dans laquelle les côtés du matériau de recouvrement avant (31) et le matériau de recouvrement de dossier (32) sont continus est fixée sur la surface arrière du côté de la plaque inférieure (10) ; et
le coussin avant (21) est couvert avec le matériau de recouvrement avant (31), et le coussin de dossier (22) est couvert avec le matériau de recouvrement de dossier (32).

2. Siège (S) pour un véhicule à deux ou trois roues selon la revendication 1, étant précisé que le matériau de recouvrement avant (31) qui couvre la partie d'assise (SF) et le matériau de recouvrement de dossier (32) qui couvre le dossier (SB) sont reliés l'un à l'autre par soudage par soudeuse haute fréquence et sont formés de manière continue.

3. Siège (S) pour un véhicule à deux ou trois roues selon la revendication 1, étant précisé qu'au moins dans la zone limite entre le matériau de recouvrement avant (31) et le matériau de recouvrement de dossier (32), le tissu introduit (33) comprend une partie rentrée centrale (33a) et des parties rentrées (33b) sur les deux côtés de ladite partie rentrée centrale (33a).

4. Siège (S) pour un véhicule à deux ou trois roues selon la revendication 1, étant précisé que dans la zone limite entre le coussin avant (21) et le coussin de dossier (22), la plaque inférieure (10) est pourvue d'une partie concave dirigée vers le côté inférieur du corps de véhicule, et qu'à l'arrière de ladite partie concave, la plaque inférieure (10) est pourvue de la fente (11) formée presque au même endroit que la zone de surface supérieure du coussin avant (21).

5. Siège (S) pour un véhicule à deux ou trois roues selon la revendication 1, étant précisé qu'un élément de recouvrement (40) pour couvrir la fente d'introduction (11) et le tissu introduit (33) introduit par celle-ci est relié à la surface arrière de la plaque inférieure (10).

6. Siège (S) pour un véhicule à deux ou trois roues selon la revendication 1, étant précisé que le coussin de dossier (22) est formé de manière à devenir progressivement plus épais vers l'arrière, la zone limite entre le coussin avant (21) et le coussin de dossier (22) étant mince.

7. Siège (S) pour un véhicule à deux ou trois roues selon la revendication 3, étant précisé que la partie rentrée centrale (33a) et les parties rentrées (33b) sur les deux côtés du tissu introduit (33) sont fixées à la plaque inférieure (10) à l'aide d'agrafes (15).

8. Procédé de fabrication pour un siège (S) pour un véhicule à deux ou trois roues sur lequel l'occupant du siège est assis à califourchon, le siège (S) étant pourvu d'une partie d'assise (SF) et d'un dossier (SB) formé dans le prolongement continu de celle-ci, et conçu de telle sorte qu'un matériau de rembourrage (20) est placé sur une plaque inférieure (10) et est couvert par un recouvrement (30), comprenant :
une étape de fixation de tissu introduit, lors de laquelle un tissu introduit central (33a), relié à une zone globalement centrale d'un recouvrement (30) dans laquelle un matériau de recouvrement avant (31) qui couvre une partie d'assise (SF) et un matériau de recouvrement de dossier (32) qui couvre le dossier (SB) sont formés de manière continue, est fixé sur le côté de la surface arrière d'une plaque inférieure (10) à travers une fente (11) prévue dans ladite plaque inférieure (10) ;
une étape de fixation de côtés lors de laquelle une partie dans laquelle les côtés du matériau de recouvrement avant (31) et le côté du matériau de recouvrement de dossier (32) sont continus est fixée sur la surface arrière latérale de la plaque inférieure (10) ;
une étape de fixation de côtés de tissu introduit lors de laquelle les côtés du tissu introduit (33) formés au moins dans la zone limite entre le matériau de recouvrement avant (31) et le matériau de recouvrement de dossier (32) sont fixés à la plaque inférieure (10) ;
une étape de placement de coussin avant lors de laquelle un coussin avant (21) est placé dans la zone d'assise de la plaque inférieure (10) ;
une étape de fixation de matériau de recouvrement avant lors de laquelle le matériau de recouvrement avant (31) est placé sur le coussin avant (21) en étant soumis à un traitement final, à l'exception d'une zone de recouvrement dans laquelle la partie d'assise (SF) est dans le prolongement continu du dossier (SB), et est fixé ;
une étape de placement de coussin de dossier lors de laquelle un coussin de dossier (22) est placé sur la zone de disposition de dossier de la plaque inférieure (10) en étant mis en contact avec le coussin avant (21) par l'intermédiaire du matériau de recouvrement avant (31) placé sur le coussin avant (21) ; et
une étape de fixation de matériau de recouvrement de dossier (32) lors de laquelle le matériau de recouvrement de dossier (32) est placé sur le coussin de dossier (22), en étant soumis à un traitement final, et est fixé.

9. Procédé de fabrication pour un siège (S) pour un véhicule à deux ou trois roues selon la revendication 8, étant précisé que le tissu introduit (33) est fixé à la plaque inférieure (10) à l'aide d'agrafes (15) lors de l'étape de fixation de tissu introduit.
